# EUROPEAN PATENT SPECIFICATION

(11) **EP 2 523 356 B1**
(45) Date of publication and mention of the grant of the patent: **27.02.2019**
(21) Application number: 11305552.9
(22) Date of filing: 09.05.2011
(51) Int. Cl.: H04B 3/44

(54) **Power supply control device for electronic circuit(s) of a submarine equipment**
Stromversorgungssteuervorrichtung für elektronische Schaltung(en) einer Unterwasserausrüstung
Dispositif de contrôle de l'alimentation électrique pour un ou plusieurs circuits électriques d'un équipement sous-marin

(43) Date of publication of application: 14.11.2012
(73) Proprietor: Alcatel Lucent, 91620 Nozay (FR)
(72) Inventor: Verhaege, Thierry, 91620 Nozay (FR); Cordier, Alain, 91620 Nozay (FR); Julien, Bernard, 91620 Nozay (FR)
(74) Representative: Nokia EPO representatives

(56) References cited:
- EP-A1- 1 220 469

## Description

### TECHNICAL DOMAIN

The present invention relates to submarine equipments that are used in submarine (tele)communications.

### BACKGROUND ART

Some submarine equipments, such as branching units, or optical switches, comprise one or more electronic circuits that are mounted in series between first and second pins which may be fed either with a first (or trunk) current provided by a first (or trunk) connection, or with a second (or branch) current provided by a second (or branch) connection.

For instance, when the submarine equipment is a branching unit, it comprises at least three terrestrial terminals (A, B, C) electrically coupled by submarine cables respectively to three terrestrial equipments (E_{A}, E_{B}, E_{C}) and a sea terminal (M) electrically connected to a sea electrode. This branching unit is intended to couple two of the three terrestrial terminals (for instance A and B) to define a trunk segment between their corresponding terrestrial equipments (for instance E_{A} and E_{B}), to which the first (or trunk) connection belongs, and to couple a third one of the three terrestrial terminals (for instance C) with the sea terminal (M) to define a branch segment between the corresponding terrestrial equipment (for instance E_{C}) and the sea electrode, to which the second (or branch) connection belongs. These couplings define a requested configuration that may be changed at any time by an electronic circuit of the submarine branching unit upon reception of a configuration request.

### SUMMARY

Some of the electronic circuits of a submarine equipment offering at least one function that may be requested at any time, need to be fed continuously with current to be capable of maintaining a continuous service and/or immediately carrying out a function that has just been requested. As mentioned above, these electronic circuits may find their power at the trunk connection and/or at the branch connection. So, when there is no available trunk current the electronic circuits could be fed with the branch current, and when there is no available branch current the electronic circuits could be fed with the trunk current.

As it is known by the man skilled in the art there may be a high voltage difference (typically 10 kV) between the trunk connection and the branch connection. So, when the situation changes, a difficulty exists for changing the mode of powering of an electronic circuit, without the risk of creating a catastrophic short-circuit between the trunk and branch connections.

To prevent this risk of short-circuit, it has been proposed to provide the submarine branching unit with two independent electronic circuits, respectively dedicated to the branch and trunk segments. Such a solution is notably described in the patent document US 6,987,902. Unfortunately, this solution involves complexity, a significant continuous voltage drop and an associated thermal load, which do not ease addition of new functionalities into the submarine branching unit.

So, some embodiments of the invention aim at allowing a power supply control of electronic circuits of submarine equipments that is intended to render them simpler and/or more reliable and/or subject to lower thermal loads.

An embodiment of the invention comprises a power supply control device, intended for equipping a submarine equipment comprising at least one electronic circuit mounted in series between first and second pins, and comprising:
- a first control means arranged for selectively coupling the first and second pins either to first and second branch pins of a branch connection, respectively, to feed the electronic circuit(s) with a branch current, or to first and second trunk pins of a trunk connection, respectively, to feed the electronic circuit(s) with a trunk current, and
- a second control means arranged for coupling either the first and second branch pins together to by-pass the branch current, or the first and second trunk pins together to by-pass the trunk current.

This device may include additional characteristics considered separately or combined, and notably:
- its second control means may be arranged for coupling either the first and second branch pins together, before the first control means couples the first and second pins to the first and second trunk pins, to by-pass the branch current, or the first and second trunk pins together, before the first control means couples the first and second pins to the first and second branch pins, to by-pass the trunk current;
- its first control means may comprise a first relay means arranged for coupling the first pin either to the first branch pin or to the first trunk pin depending on a mechanical activation, a second relay means arranged for coupling the second pin either to the second branch pin or to the second trunk pin depending on a mechanical activation, and a relay coil arranged for producing the mechanical activation to control simultaneously the first and second relay means, depending on the value of a trunk voltage difference between the first and second trunk pins;
   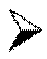 the relay coil of the first control means may be mounted in series between the first and second trunk pins;
- the second control means may comprise a first relay means arranged either for being open or for being closed for coupling the first trunk pin to the second trunk pin depending on a mechanical activation, a second relay means arranged either for being closed for coupling the first branch pin to the second branch pin or for being open depending on the same mechanical activation, and a relay coil arranged for producing the mechanical activation to control simultaneously the first and second relay means, depending on the value of the trunk current that feeds it;
   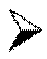 the relay coil of the second control means may be mounted between the first and second trunk pins;
   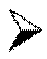 the second relay means of the second control means may be mounted between the first and second branch pins;
      - it may comprise a voltage limiter mounted in parallel with the second relay means of the second control means between the first and second branch pins;
   - it may further comprise an inductance, mounted in series with the electronic circuit(s) between the first and second pins and arranged for storing energy to maintain a current temporarily when a main current drop occurs, and a free-wheel diode, mounted in parallel with the electronic circuit(s) and inductance between the first and second pins and arranged for allowing the maintained current to loop back toward the electronic circuit(s) in order for it (them) to be fed continuously.

Another embodiment of the invention comprises a submarine equipment comprising, on the one hand, at least one electronic circuit mounted in series between first and second pins, and, on the other hand, a power supply control device such as the one above introduced.

This submarine equipment may include additional characteristics considered separately or combined, and notably:
- it may constitute a branching unit comprising at least three terrestrial terminals intended to be coupled respectively to three terrestrial equipments, a sea terminal intended to be connected to a sea electrode, and one or several relays arranged for selectively coupling two of the three terrestrial terminals to define a trunk segment between their corresponding terrestrial equipments and a third one of three terrestrial terminals with the sea terminal to define a branch segment between the corresponding terrestrial equipment and the sea electrode, depending on command signals produced by the electronic circuit;
   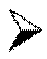 its electronic circuit may comprise electronic components for producing the command signals depending on control signals, and a control board arranged for receiving instructions from at least one of the terrestrial equipments and for producing the control signals depending on these received instructions and/or on instructions generated locally.

### BRIEF DESCRIPTION OF THE DRAWINGS

Other features and advantages of the invention will become apparent on examining the detailed specifications hereafter and the appended drawings, wherein:
- figure 1 schematically and functionally illustrates an example of submarine branching unit, coupled to three terrestrial equipments and to a sea electrode, and comprising an example of embodiment of a power supply control device according to the invention set in a first state allowing feeding of an electronic circuit by a trunk current,
- figure 2 schematically and functionally illustrates the submarine branching unit of figure 1 with its power supply control device set in a first intermediate state between the first state and a second state allowing feeding of the electronic circuit by a branch current,
- figure 3 schematically and functionally illustrates the submarine branching unit of figure 1 with its power supply control device set in the second state allowing feeding of the electronic circuit by a branch current, and
- figure 4 schematically and functionally illustrates the submarine branching unit of figure 1 with its power supply control device set in a second intermediate state between the second state and the first state.

The appended drawings may serve not only to complete the invention, but also to contribute to its definition, if need be.

### DETAILED DESCRIPTION

Embodiments of the invention aim at providing submarine equipments BU with a power supply control device D that may be parts of (tele)communication infrastructures (or systems).

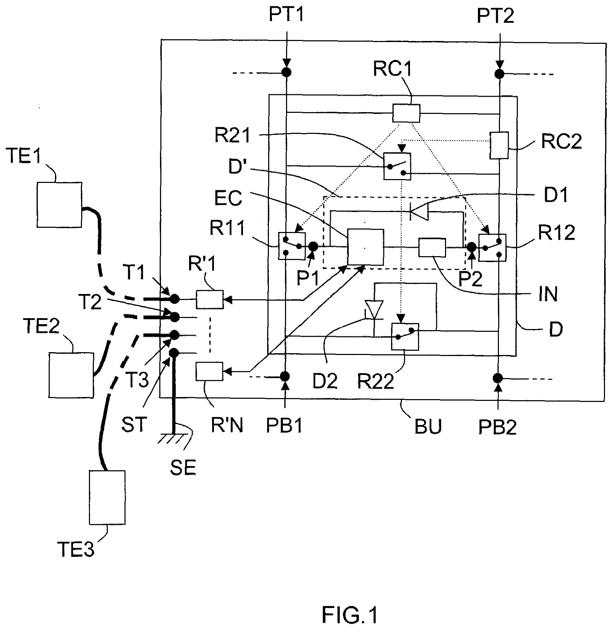

As illustrated in figures 1 to 4, in the following description it will be considered, as example, that the submarine equipment BU is a branching unit. But, the invention concerns potentially any type of submarine equipment comprising at least one electronic circuit EC to be supplied with current and that may be linked to more than two submarine cables, and notably optical switches.

The example of embodiment of branching unit BU, illustrated in figures 1 to 4, comprises three terrestrial terminals Tk (k = 1 to 3), that are coupled respectively to three terrestrial equipments TEk through cables, and a sea terminal ST, that is connected to a sea electrode SE. It is important to note that a branching unit BU may comprise more than three terrestrial terminals Tk (for instance four or five), and/or more than one sea terminal ST (for instance two or three). It is also important to note that a submarine equipment that is concerned by the invention may comprise one terrestrial terminal Tk, coupled to a terrestrial equipment TEk through a cable, and a sea terminal ST, connected to a sea electrode, or two sea terminals, connected respectively to two sea electrodes.

The terrestrial terminals Tk and the sea terminal ST may be electrically coupled two by two by means of relay(s) R'n (n = 1 to N, with N ≥ 1), which are controlled by means of at least one electronic circuit EC. It is important to note that the number N of relays R'n may be greater than the number of terminals Tk and ST, notably when the branching unit BU offers a functionality of the type "make-before-break", which allows to establish new connections before closing old ones.

These relays R'n are intended to couple two of the three terrestrial terminals Tk to define a trunk segment between their corresponding terrestrial equipments TEk, and a third one of the three terrestrial terminals Tk with the sea terminal ST to define a branch segment between the corresponding terrestrial equipment TEk and the sea electrode SE.

Though it is not illustrated, the branching unit BU could comprise one or more other electronic circuits intended to implement at least one function. For instance, when the branching unit BU also acts as a repeater, it may comprise another electronic circuit offering an optical amplification and/or an optical modulation for transmitting information to at least one of the terrestrial equipments TEk.

The electronic circuit EC is mounted in series between first P1 and second P2 pins. These first P1 and second P2 pins are coupled each to one amongst the terminals T1, T2, T3 and ST, depending on the configuration imposed by the relays R'n (during reconfigurations, they could also be open-circuited, or connected to more than one terminal). As illustrated, these couplings occur, on the one hand, through first PB1 and second PB2 branch pins of a branch connection, defined by the relays R'n and which is a part of the branch segment located into the branching unit BU, and on the other hand, through first PT1 and second PT2 trunk pins of a trunk connection, defined by the relays R'n and which is a part of the trunk segment located into the branching unit BU. The branch connection provides a branch current, while the trunk connection provides a trunk current.

The branching unit BU further comprises a power supply control device D that is intended to provide the electronic circuit EC with current through the first P1 and second P2 pins.

It is important to note that in the non limiting example illustrated in figures 1 to 4, the electronic circuit EC is part of another device D' that does not belong to the power supply control device D. This is the reason why this other device D' appears in dotted line. But in a variant of embodiment this other device D' could belong at least partly to the power supply control device D.

This (power supply control) device D comprises at least a first control means R1j and RC1 and a second control means R2j and RC2.

The first control means R1j and RC1 is arranged for selectively coupling the first P1 and second P2 pins either to the first PB1 and second PB2 branch pins, respectively, to feed the electronic circuit EC with the branch current, or to the first PT1 and second PT2 trunk pins, respectively, to feed the electronic circuit EC with the trunk current.

The second control means R2j and RC2 is arranged for coupling either the first PB1 and second PB2 branch pins together to by-pass the branch current, or the first PT1 and second PT2 trunk pins together to by-pass the trunk current.

So the device D acts sequentially through its second control means R2j and RC2, and then through its first control means R1j and RC1.

Preferably, the second control means R2j and RC2 is arranged for coupling either the first PB1 and second PB2 branch pins together before the first control means R1j and RC1 couples the first P1 and second P2 pins to the first PT1 and second PT2 trunk pins to by-pass the branch current, or the first PT1 and second PT2 trunk pins together before the first control means R1j and RC1 couples the first P1 and second P2 pins to the first PB1 and second PB2 branch pins to by-pass the trunk current.

For instance, and as illustrated, the first control means R1j and RC1 may comprise a first relay means R11 (j = 1), a second relay means R12 (j = 2) and a relay coil RC1.

The first relay means R11 comprises three ports. A first port is connected to the first pin P1, a second port is coupled to the first trunk pin PT1 and a third port is coupled to the first branch pin PB1. This first relay means R11 is arranged for coupling the first pin P1 either to the first branch pin PB1 (by means of its first and third ports) or to the first trunk pin PT1 (by means of its first and second ports) depending on a mechanical activation provided by the relay coil RC1.

The second relay means R12 comprises three ports. A first port is connected to the second pin P2, a second port is coupled to the second trunk pin PT2 and a third port is coupled to the second branch pin PB2. This second relay means R12 is arranged for coupling the second pin P2 either to the second branch pin PB2 (by means of its first and third ports) or to the second trunk pin PT2 (by means of its first and second ports) depending on a mechanical activation provided by the relay coil RC1.

The relay coil RC1 is preferably connected between the first PT1 and second PT2 trunk pins. It is arranged for producing the mechanical activation, that allows to control simultaneously the first R11 and second R12 relay means, depending on the value of the trunk voltage difference between the first PT1 and second PT2 trunk pins.

In order for the first R11 and second R12 relay means to be controlled simultaneously (i.e. in a synchronous manner) by the same mechanical activation, they form preferably two parts mechanically linked of the same relay (for instance of the "double pole-double through" type).

It is recalled that in presence of a sufficient current in a relay coil its first port is put in contact with its second (or third) port, while in the absence of a sufficient current in this relay coil its first port is put in contact with its third (or second) port.

For instance, and as illustrated, the second control means R2j and RC2 comprises a first relay means R21 (j = 1), a second relay means R22 (j = 2), and a relay coil RC2.

The first relay means R21 comprises two ports and acts as a switch. A first port is connected to the first trunk pin PT1 and a second port is coupled to the second trunk pin PT2. This first relay means R21 is arranged either for being open or for being closed for coupling the first trunk pin PT1 to the second trunk pin PT2 (by means of its first and second ports) depending on a mechanical activation provided by the relay coil RC2.

The second relay means R22 comprises two ports and acts as a switch. A first port is connected to the first branch pin PB1 and a second port is coupled to the second branch pin PB2. This second relay means R22 is arranged either for being closed for coupling the first branch pin PB1 to the second branch pin PB2 (by means of its first and second ports) or for being open depending on the same mechanical activation than the one provided by the relay coil RC2 for the first relay means R21.

As illustrated, the second relay means R22 is preferably mounted between the first PB1 and second PB2 branch pins.

The relay coil RC2 is preferably connected between the second port of the second relay means R22 and the second trunk pin PT2. It is arranged for producing the mechanical activation, that allows to control simultaneously the first R21 and second R22 relay means, depending on the value of the trunk current that feeds it.

In order for the first R21 and second R22 relay means to be controlled simultaneously (i.e. in a synchronous manner) by the same mechanical activation, they form preferably two parts mechanically linked of the same relay (for instance of the "double pole-single through" type).

Preferably, the relay coil RC2 is designed to operate at relatively high current and low voltage, while the relay coil RC1 is designed to operate at relatively low current and high voltage. A "high current" shall be understood as moderately lower than the rated trunk current, while a "low current" shall be understood as small compared to the rated trunk current. The operating voltage (a few volts) is more or less inversely proportional to the operating current. In fact, the "relatively high current" must correspond to the minimal trunk current that is guaranteed when the trunk connection is fed (while taking into account possible disturbances and a security margin). So, the relatively high current can be set, for instance, to at least 70% of the nominal current. The "relatively low current" must be as low as possible compared to the nominal current, given that it is subtracted from the current that feeds the electronic circuit EC and an inductance IN (described below). The practical limit depends from the technology of the first R11 and second R12 relay means and the relay coil RC1 (the relay coil RC1 needs a minimal current to be efficient). So, the relatively low current can be set, for instance, to approximately 10% of the nominal current. But, it may be comprised between 5% and 15% of the nominal current.

For instance and as illustrated in figure 1, when there is a sufficient trunk current and when the first relay means R21 is open and that in the same time the second relay means R22 is closed, the value of the trunk voltage difference is sufficient for the relay coil RC1 to generate a mechanical activation that induces the coupling of the first pin P1 to the first trunk pin PT1 and the coupling of the second pin P2 to the second trunk pin PT2, which allows the electronic circuit EC to be fed with the trunk current and the branch current to be by-passed through the second relay means R22 of the second control means.

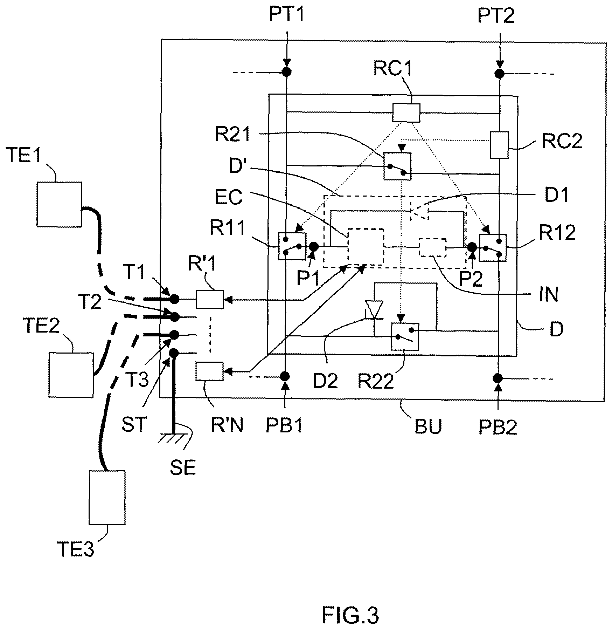

Now and as illustrated in figure 3, when the first relay means R21 is closed and at the same time the second relay means R22 is open, the value of the trunk voltage difference is sufficiently low for the relay coil RC1 to generate a mechanical activation that induces the coupling of the first pin P1 to the first branch pin PB1 and the coupling of the second pin P2 to the second branch pin PB2, which allows the electronic circuit EC to be fed with the branch current and the trunk current to be by-passed through the first relay means R21 of the second control means.

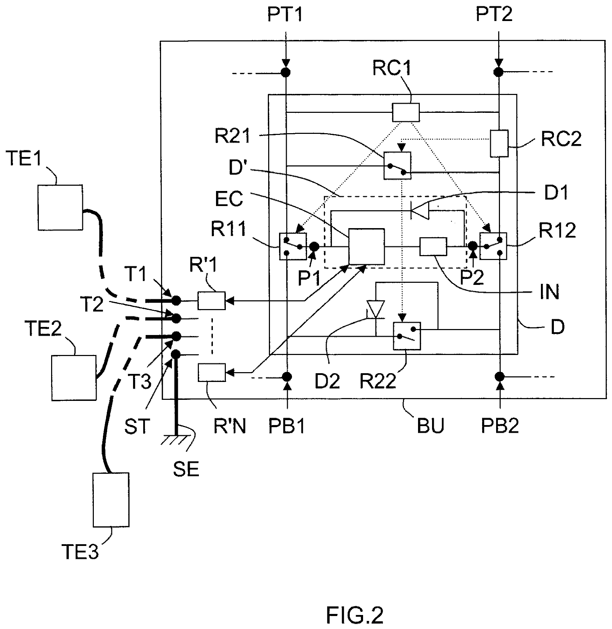

As illustrated, the device D may further comprise a voltage limiter (or "transient voltage suppressor") D2 mounted in parallel with the second relay means R22 of the second control means (R2j, RC2) between the first PB1 and second PB2 branch pins. This voltage limiter D2 is intended for allowing the branch current to flow between the first PB1 and second PB2 branch pins in the transient situation where the second relay means R22 is open while the first P1 and second P2 pins are still not connected to the branch connection, as illustrated in figure 2. For instance, this voltage limiter D2 may be a Zener diode.

As mentioned before, and as illustrated, the device D may be arranged for supplying with current another device D' (in dotted line). For instance, this other device D' may comprise an inductance IN and a free-wheel diode D1 that are intended to work during each reconfiguration of the connections between terminals Tk and ST, so that they could be really fed continuously.

The inductance IN is mounted in series with the electronic circuit EC between pins P1 and P2. It is arranged for storing energy when it is fed with the trunk or branch current, in order to be capable of maintaining a current temporarily (i.e. producing a transient current) when a drop (down) of this trunk or branch current occurs (for example during a terminal reconfiguration).

The free-wheel diode D1 is mounted in parallel with the electronic circuit EC and inductance IN, between the first P1 and second P2 pins. It is arranged for allowing the maintained (or transient) current (produced by the inductance IN) to loop back toward the electronic circuit EC in order for it to be fed continuously.

So, when the trunk or branch current (between the first P1 and second P2 pins) drops down or vanishes, the inductance IN produces a maintained (or transient) current that is looped back with the aid of the free-wheel diode D1 to maintain for a while a current through the electronic circuit EC.

When the electronic circuit EC is intended for controlling the interconnections between terminals Tk and ST, it may comprise at least electronic components and a control board.

The control board is arranged for receiving instructions from at least one of the terrestrial equipments TEk and for producing control signals depending on these received instructions or on instructions locally generated. These control signals are intended for controlling indirectly the relays R'n to reach a requested configuration.

The electronic components of the electronic circuit EC may comprise relay coils associated to transistors and controlling the states of the relays R'n. So, depending on the targeted configuration, the control board switches on (or alternatively off) the transistors that allow to power (or alternatively depower) the relay coils.

It is important to note that the other device D' (in dotted line) could comprise other means intended for producing a transient current for feeding the electronic circuit EC (notably during a relay reconfiguration) than the ones comprising the inductance IN and the free-wheel diode D1.

In the situation illustrated in figure 1, a sufficient trunk current flows from the first trunk pin PT1 to the second trunk pin PT2, via the first relay means R11, the electronic circuit EC, the inductance IN, the second relay means R12 and the relay coil RC2. So, this trunk current feeds the relay coil RC2 which maintains the first relay means R21 in its open state and the second relay means R22 in its closed state. This last contact allows the branch current to directly flow from the first branch pin PB1 to the second branch pin PB2 without a significant voltage drop.

In the same time the electronic circuit EC, the inductance IN and the second relay means R12 oppose a significant voltage drop to the trunk current, which is sufficient for the relay coil RC1 to be fed with a small part of the trunk current, and therefore for maintaining the first relay means R21 in its open state and the second relay means R22 in its closed state, maintaining the configuration as it is.

Supposing now that the trunk current drops down, the relay coil RC2 becomes insufficiently fed, and allows the first relay means R21 to reach (or fly to) its closed state, and at the same time the second relay means R22 to reach (or fly to) its open state.

During the fly (which may last a few milliseconds), the branch current is allowed to flow through the voltage limiter D2.

The task of the second control means (RC2 and R2j) is "easy", as it has only to switch low voltages and currents.

As illustrated in figure 2, as soon as the first relay means R21 reaches its closed state, the trunk voltage difference between the first PT1 and second PT2 trunk pins drops down. Therefore, the relay coil RC1 becomes insufficiently fed, and allows the first port of the first relay means R11 to loosen contact with the second port of this first relay means R11 and fly towards the third port of this first relay means R11, and the first port of the second relay means R12 to loosen contact with the second port of this second relay means R12 and fly towards the third port of this second relay means R12.

During the fly (a few milliseconds), there is no more current flowing from the first pin P1 to the second pin P2, but, as explained before, the inductance IN maintains for a while the current through the free-wheel diode D1.

As illustrated in figure 3, as soon as the first port of the first relay means R11 comes in contact with the third port of this first relay means R11 and that the first port of the second relay means R12 comes in contact with the third port of this second relay means R12, the branch current flows from the first branch pin PB1 to the second branch pin PB2 via the first relay means R11, the electronic circuit EC, the inductance IN and the second relay means R12.

The task for the first control means (R1j and RC1) is "moderately hard", as it has to maintain high voltage isolation between the second and third ports of its first relay means R11, and between the second and third ports of its second relay means R12, despite of the "flying ports", but the trunk current that it has to switch off disposes of a second easy path via the first relay means R21.

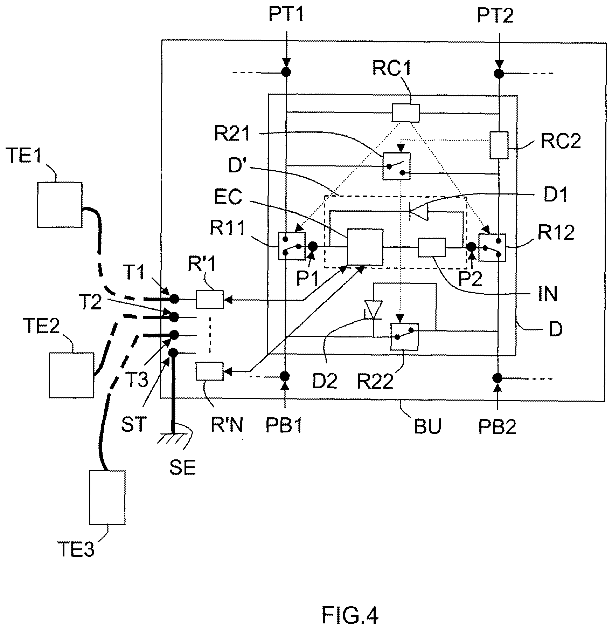

Supposing now that the trunk current ramps up again, the relay coil RC2 is activated, which allows the first relay means R21 to reach (or fly to) its open state and the second relay means R22 to reach (or fly to) its closed state. This intermediate situation is illustrated in figure 4.

Loosening the by-pass provided by the first relay means R21, causes the trunk voltage to increase, which feeds the relay coil RC1 and therefore makes the first port of the first relay means R11 to fly again to the position described in figure 1 and the first port of the second relay means R12 to fly again to the position described in figure 1.

During the fly, the electronic circuit EC is fed by the inductance IN through the free-wheel diode D1, as explained before.

So, the device D allows:
- the electronic circuit EC to be fed by the trunk current when possible, to be fed by the branch current otherwise, and to be fed by the inductance IN during the transient phases ("port flies"),
- the high voltage isolation between the trunk and branch connections to be continuously maintained,
- the element (trunk or branch) that does not have to feed the electronic circuit EC to have minimized voltage drop,
- the electronic circuit EC to have low continuous voltage drop in presence of the inductance associated to the free-wheel diode D1, though it can benefit of transient over-voltages (provided by the inductance IN) when necessary to its reconfiguration actions (typically feed relay coils).

The invention is not limited to the embodiments of power supply control device and submarine equipment described above, only as examples, but it encompasses all alternative embodiments which may be considered by one skilled in the art within the scope of the claims hereafter.

## Claims

1. Power supply control device (D) for a submarine equipment (BU) comprising at least one electronic circuit (EC) mounted in series between first (P1) and second (P2) pins, i) a first control means (R1j, RC1) arranged for selectively coupling said first (P1) and second (P2) pins either to first (PB1) and second (PB2) branch pins of a branch connection, respectively, to feed said electronic circuit (EC) with a branch current, or to first (PT1) and second (PT2) trunk pins of a trunk connection, respectively, to feed said electronic circuit (EC) with a trunk current, and ii) a second control means (R2j, RC2) arranged for coupling either said first (PB1) and second (PB2) branch pins together to by-pass said branch current, or said first (PT1) and second (PT2) trunk pins together to by-pass said trunk current.

2. Power supply control device according to claim 1, wherein said second control means (R2j, RC2) is configured to couple said first (PB1) and second (PB2) branches together before said first control means (R1j, RC1) couples said first (P1) and second (P2) pins to said first (PT1) and second (PT2) trunk pins, to by-pass said branch current, or said first (PT1) and second (PT2) trunk pins together, before said first control means (R1j, RC1) couples said first (P1) and second (P2) pins to said first (PB1) and second (PB2) branch pins, to by-pass said trunk current.

3. Power supply control device according to claim 1 or claim 2, wherein said first control means (R1j, RC1) comprises a first relay means (R11) arranged for coupling said first pin (P1) either to said first branch pin (PB1) or to said first trunk pin (PT1) depending on a mechanical activation, a second relay means (R12) arranged for coupling said second pin (P2) either to said second branch pin (PB2) or to said second trunk pin (PT2) depending on a mechanical activation, and a relay coil (RC1) arranged for producing said mechanical activation to control simultaneously said first (R11) and second (R12) relay means, depending on the value of a trunk voltage difference between said first (PT1) and second (PT2) trunk pins.

4. Power supply control device according to claim 3, wherein said relay coil (RC1) of said first control means (R1j, RC1) is mounted in series between said first (PT1) and second (PT2) trunk pins.

5. Power supply control device according to any one of claims 1 to 4, wherein said second control means (R2j, RC2) comprises a first relay means (R21) arranged either for being open or for being closed for coupling said first trunk pin (PT1) to said second trunk pin (PT2) depending on a mechanical activation, a second relay means (R22) arranged either for being closed for coupling said first branch pin (PB1) to said second branch pin (PB2) or for being open depending on the same mechanical activation, and a relay coil (RC2) arranged for producing the mechanical activation to control simultaneously said first (R21) and second (R22) relay means, depending on the value of the trunk current that feeds it.

6. Power supply control device according to claim 5, wherein said relay coil (RC2) of said second control means (R2j, RC2) is mounted between said first (PT1) and second (PT2) trunk pins.

7. Power supply control device according to any one of claims 5 and 6, wherein said second relay means (R22) of said second control means (R2j, RC2) is mounted between said first (PB1) and second (PB2) branch pins.

8. Power supply control device according to claim 7, wherein it comprises a voltage limiter (D2) mounted in parallel with said second relay means (R22) of said second control means (R2j, RC2) between said first (PB1) and second (PB2) branch pins.

9. Power supply control device according to any one of claims 1 to 8, wherein it comprises i) an inductance (IN) mounted in series with said electronic circuit (EC) between said first (P1) and second (P2) pins and arranged for storing energy to maintain a current temporarily when a main current drop occurs, and ii) a free-wheel diode (D1) mounted in parallel with said electronic circuit (EC) and said inductance (IN) between said first (P1) and second (P2) pins and arranged for allowing said maintained current to loop back toward said electronic circuit (EC) in order for it to be fed continuously.

10. Submarine equipment (BU) comprising at least one electronic circuit (EC) mounted in series between first (P1) and second (P2) pins, wherein it further comprises a power supply control device (D) according to any one of the preceding claims.

11. Submarine equipment according to claim 10, wherein it constitutes a branching unit comprising at least three terrestrial terminals (Tk) intended to be coupled respectively to three terrestrial equipments (TEk), a sea terminal (ST) intended to be connected to a sea electrode (SE), and at least one relay (Rn) arranged for selectively coupling two of said three terrestrial terminals (Tk) to define a trunk segment between their corresponding terrestrial equipments (TEk) and a third one of said three terrestrial terminals (Tk) with said sea terminal (ST) to define a branch segment between the corresponding terrestrial equipment (TEk) and said sea electrode (SE), depending on command signals produced by said electronic circuit (EC).

12. Submarine equipment according to claim 11, wherein said electronic circuit (EC) comprises electronic components arranged for producing said command signal mechanical activations depending on control signals, and a control board arranged for receiving instructions from at least one of said terrestrial equipments (TEk) and for producing said control signals depending on said received instructions and/or on instructions generated locally.

## Patentansprüche

1. Leistungsversorgungssteuervorrichtung (D) für eine Unterwasserausrüstung (BU), die wenigstens einen elektronischen Schaltkreis (EC) umfasst, der in Reihe zwischen einem ersten (P1) und zweiten (P2) Stift montiert ist, wobei i) ein erstes Steuermittel (R1j, RC1) zum selektiven Koppeln des ersten (P1) und zweiten (P2) Stifts entweder mit einem ersten (PB1) bzw. zweiten (PB2) Zweigstift einer Zweigverbindung, um den elektronischen Schaltkreis (EC) mit einem Zweigstrom zu speisen, oder mit einem ersten (PT1) bzw. zweiten (PT2) Hauptstrangstift einer Hauptstrangverbindung, um den elektronischen Schaltkreis (EC) mit einem Hauptstrangstrom zu speisen, eingerichtet ist und ii) ein zweites Steuermittel (R2j, RC2) zum Koppeln von entweder dem ersten (PB1) und zweiten (PB2) Zweigstift miteinander, um den Zweigstrom zu überbrücken, oder dem ersten (PT1) und zweiten (PT2) Hauptstrangstift, um den Hauptstrangstrom zu überbrücken, eingerichtet ist.

2. Leistungsversorgungssteuervorrichtung nach Anspruch 1, wobei das zweite Steuermittel (R2j, RC2) dazu konfiguriert ist, den ersten (PB1) und zweiten (PB2) Zweig miteinander zu koppeln, bevor das erste Steuermittel (R1j, RC1) den ersten (P1) und zweiten (P2) Stift mit dem ersten (PT1) und zweiten (PT2) Hauptstrangstift koppelt, um den Zweigstrom zu überbrücken, oder den ersten (PT1) und zweiten (PT2) Hauptstrangstift miteinander zu koppeln, bevor das erste Steuermittel (R1j, RC1) den ersten (P1) und zweiten (P2) Stift mit dem ersten (PB1) und zweiten (PB2) Zweigstift koppelt, um den Hauptstrangstrom zu überbrücken.

3. Leistungsversorgungssteuervorrichtung nach Anspruch 1 oder Anspruch 2, wobei das erste Steuermittel (R1j, RC1) ein erstes Relaismittel (R11), das zum Koppeln des ersten Stifts (P1) entweder mit dem ersten Zweigstift (PB1) oder dem ersten Hauptstrangstift (PT1) in Abhängigkeit von einer mechanischen Aktivierung eingerichtet ist, ein zweites Relaismittel (R12), das zum Koppeln des zweiten Stifts (P2) entweder mit dem zweiten Zweigstift (PB2) oder dem zweiten Hauptstrangstift (PT2) in Abhängigkeit von einer mechanischen Aktivierung eingerichtet ist, und eine Relaisspule (RC1), die zum Produzieren der mechanischen Aktivierung, um gleichzeitig das erste (R11) und zweite (R12) Relaismittel zu steuern, in Abhängigkeit von dem Wert einer Hauptstrangspannungsdifferenz zwischen dem ersten (PT1) und zweiten (PT2) Hauptstrangstift eingerichtet ist, umfasst.

4. Leistungsversorgungssteuervorrichtung nach Anspruch 3, wobei die Relaisspule (RC1) des ersten Steuermittels (R1j, RC1) in Reihe zwischen dem ersten (PT1) und zweiten (PT2) Hauptstrangstift montiert ist.

5. Leistungsversorgungssteuervorrichtung nach einem der Ansprüche 1 bis 4, wobei das zweite Steuermittel (R2j, RC2) ein erstes Relaismittel (R21), das dazu eingerichtet ist, in Abhängigkeit von einer mechanischen Aktivierung entweder offen zu sein oder geschlossen zu sein, um den ersten Hauptstrangstift (PT1) mit dem zweiten Hauptstrangstift (PT2) zu koppeln, ein zweites Relaismittel (R22), das dazu eingerichtet ist, in Abhängigkeit von einer mechanischen Aktivierung entweder geschlossen zu sein, um den ersten Zweigstift (PB1) mit dem zweiten Zweigstift (PB2) zu koppeln, oder offen zu sein, und eine Relaisspule (RC2), die dazu eingerichtet ist, die mechanische Aktivierung in Abhängigkeit von dem Hauptstrangstrom, der sie speist, zu produzieren, um gleichzeitig das erste (R21) und zweite (R22) Relaismittel zu steuern, umfasst.

6. Leistungsversorgungssteuervorrichtung nach Anspruch 5, wobei die Relaisspule (RC2) des zweiten Steuermittels (R2j, RC2) zwischen dem ersten (PT1) und zweiten (PT2) Hauptstrangstift montiert ist.

7. Leistungsversorgungssteuervorrichtung nach einem der Ansprüche 5 und 6, wobei das zweite Relaismittel (R22) des zweiten Steuermittels (R2j, RC2) zwischen dem ersten (PB1) und zweiten (PB2) Zweigstift montiert ist.

8. Leistungsversorgungssteuervorrichtung nach Anspruch 7, wobei sie einen Spannungsbegrenzer (D2) umfasst, der parallel mit dem zweiten Relaismittel (R22) des zweiten Steuermittels (R2j, RC2) zwischen dem ersten (PB1) und zweiten (PB2) Zweigstift montiert ist.

9. Leistungsversorgungssteuervorrichtung nach einem der Ansprüche 1 bis 8, wobei sie i) eine Induktivität (IN), die in Reihe mit dem elektronischen Schaltkreis (EC) zwischen dem ersten (P1) und zweiten (P2) Stift montiert ist und zum Speichern von Energie eingerichtet ist, um einen Strom temporär aufrechtzuerhalten, wenn ein Hauptstromabfall stattfindet, und ii) eine Freilaufdiode (D1), die parallel mit dem elektronischen Schaltkreis (EC) und der Induktivität (IN) zwischen dem ersten (P1) und zweiten (P2) Stift montiert ist und zum Ermöglichen eingerichtet ist, dass ein aufrechterhaltener Strom zurück zu dem elektronischen Schaltkreis (EC) geführt wird, damit er kontinuierlich gespeist wird, umfasst.

10. Unterwasserausrüstung (BU), die wenigstens einen elektronischen Schaltkreis (EC) umfasst, der in Reihe zwischen einem ersten (P1) und zweiten (P2) Stift montiert ist, wobei sie ferner eine Leistungsversorgungssteuervorrichtung (D) nach einem der vorhergehenden Ansprüche umfasst.

11. Unterwasserausrüstung nach Anspruch 10, wobei sie eine Abzweigungseinheit darstellt, die wenigstens drei Landanschlüsse (Tk), die dazu vorgesehen sind, jeweils mit drei Landausrüstungen (Tek) gekoppelt zu werden, einen Meeresanschluss (ST), der dazu vorgesehen ist, mit einer Meereselektrode (SE) gekoppelt zu werden, und wenigstens ein Relais (Rn), das in Abhängigkeit von Befehlssignalen, die durch den elektronischen Schaltkreis (EC) produziert werden, zum selektiven Koppeln von zwei der drei Landanschlüsse (Tk), um ein Hauptstrangsegment zwischen ihren entsprechenden Landausrüstungen (Tek) zu definieren, und eines dritten der drei Landanschlüsse (Tk) mit dem Meeresanschluss (ST), um ein Zweigsegment zwischen der entsprechenden Landausrüstung (Tek) und der Meereselektrode (SE) zu definieren, umfasst.

12. Unterwasserausrüstung nach Anspruch 11, wobei der elektronische Schaltkreis (EC) elektronische Komponenten, die zum Produzieren der mechanischen Befehlssignalaktivierungen in Abhängigkeit von Steuersignalen eingerichtet sind, und eine Steuerplatine, die zum Empfangen von Anweisungen von wenigstens einer der Landausrüstungen (Tek) und zum Produzieren der Steuersignale in Abhängigkeit von den empfangenen Anweisungen und/oder von lokal erzeugten Anweisungen eingerichtet ist, umfasst.

## Revendications

1. Dispositif de commande d'alimentation (D) pour un équipement sous-marin (BU) comprenant au moins un circuit électronique (EC) monté en série entre une première (P1) et une seconde (P2) broche, i) un premier moyen de commande (R1j, RC1) agencé pour coupler sélectivement lesdites première (P1) et seconde (P2) broches soit à une première (PB1) et à une seconde (PB2) broche de branchement d'une connexion de branchement, respectivement, pour alimenter ledit circuit électronique (EC) avec un courant de branchement, soit à une première (PT1) et à une seconde (PT2) broche de jonction d'une connexion de jonction, respectivement, pour alimenter ledit circuit électronique (EC) avec un courant de jonction, et ii) un second moyen de commande (R2j, RC2) agencé pour coupler soit lesdites première (PB1) et seconde (PB2) broches de branchement ensemble pour contourner ledit courant de branchement, soit lesdites première (PT1) et seconde (PT2) broches de jonction ensemble pour contourner ledit courant de jonction.

2. Dispositif de commande d'alimentation selon la revendication 1, dans lequel ledit second moyen de commande (R2j, RC2) est configuré pour coupler lesdits premier (PB1) et second (PB2) branchements ensemble avant que ledit premier moyen de commande (R1j, RC1) couple lesdites première (P1) et seconde (P2) broches auxdites première (PT1) et seconde (PT2) broches de jonction, pour contourner ledit courant de branchement, ou lesdites première (PT1) et seconde (PT2) broches de jonction ensemble, avant que ledit premier moyen de commande (R1j, RC1) couple lesdites première (P1) et seconde (P2) broches auxdites première (PB1) et seconde (PB2) broches de jonction, pour contourner ledit courant de jonction.

3. Dispositif de commande d'alimentation selon la revendication 1 ou la revendication 2, dans lequel ledit premier moyen de commande (R1j, RC1) comprend un premier moyen de relais (R11) agencé pour coupler ladite première broche (P1) soit à ladite première broche de branchement (PB1), soit à ladite première broche de jonction (PT1) en fonction d'une activation mécanique, un second moyen de relais (R12) agencé pour coupler ladite seconde broche (P2) soit à ladite seconde broche de branchement (PB2) soit à ladite seconde broche de jonction (PT2) en fonction d'une activation mécanique, et une bobine de relais (RC1) agencée pour produire ladite activation mécanique afin de commander simultanément lesdits premier (R11) et second (R12) moyens de relais, en fonction de la valeur d'une différence de tension de jonction entre lesdites première (PT1) et seconde (PT2) broches de jonction.

4. Dispositif de commande d'alimentation selon la revendication 3, dans lequel ladite bobine de relais (RC1) dudit premier moyen de commande (R1j, RC1) est montée en série entre lesdites première (PT1) et seconde (PT2) broches de jonction.

5. Dispositif de commande d'alimentation selon l'une quelconque des revendications 1 à 4, dans lequel ledit second moyen de commande (R2j, RC2) comprend : un premier moyen de relais (R21) agencé soit pour être ouvert, soit pour être fermé afin de coupler ladite première broche de jonction (PT1) à ladite seconde broche de jonction (PT2) en fonction d'une activation mécanique, un second moyen de relais (R22) agencé soit pour être fermé afin de coupler ladite première broche de branchement (PB1) à ladite seconde broche de branchement (PB2) soit pour être ouvert en fonction de la même activation mécanique, et une bobine de relais (RC2) agencée pour produire l'activation mécanique afin de commander simultanément lesdits premier (R21) et second (R22) moyens de relais, en fonction de la valeur du courant de jonction qui l'alimente.

6. Dispositif de commande d'alimentation selon la revendication 5, dans lequel ladite bobine de relais (RC2) dudit second moyen de commande (R2j, RC2) est montée entre lesdites première (PT1) et seconde (PT2) broches de jonction.

7. Dispositif de commande d'alimentation selon l'une quelconque des revendications 5 et 6, dans lequel ledit moyen de relais (R22) dudit second moyen de commande (R2j, RC2) est monté entre lesdites première (PB1) et seconde (PB2) broches de branchement.

8. Dispositif de commande d'alimentation selon la revendication 7, dans lequel est compris un limiteur de tension (D2) monté en parallèle sur ledit moyen de relais (R22) dudit second moyen de commande (R2j, RC2), entre lesdites première (PB1) et seconde (PB2) broches de branchement.

9. Dispositif de commande d'alimentation selon l'une quelconque des revendications 1 à 8, dans lequel sont comprises i) une inductance (IN) montée en série avec ledit circuit électronique (EC) entre lesdites première (P1) et seconde (P2) broches et agencée pour stocker de l'énergie afin de maintenir temporairement un courant lorsqu'une chute du courant principal se produit, et ii) une diode de roue libre (D1) montée en parallèle sur ledit circuit électronique (EC) et ladite inductance (IN) entre lesdites première (P1) et seconde (P2) broches et agencée pour permettre audit courant maintenu de se boucler en direction dudit circuit électronique (EC) pour l'alimenter en continu.

10. Équipement sous-marin (BU) comprenant au moins un circuit électronique (EC) monté en série entre la première (P1) et la seconde (P2) broches, dans lequel est compris en outre un dispositif de commande d'alimentation (D) selon l'une quelconque des revendications précédentes.

11. Équipement sous-marin selon la revendication 10, dans lequel il constitue une unité de branchement comprenant au moins trois terminaux terrestres (Tk) destinés à être couplés respectivement à trois équipements terrestres (TEk), un terminal maritime (ST) destiné à être connecté à une électrode maritime (SE), et au moins un relais (Rn) agencé pour coupler sélectivement deux desdits trois terminaux terrestres (Tk) afin de définir un segment de jonction entre leurs équipements terrestres correspondants (TEk) et un troisième desdits trois terminaux terrestres (Tk) avec ledit terminal maritime (ST) pour définir un segment de branchement entre l'équipement terrestre correspondant (TEk) et ladite électrode maritime (SE), selon les signaux de commande produits par ledit circuit électronique (EC).

12. Équipement sous-marin selon la revendication 11, dans lequel ledit circuit électronique (EC) comprend des composants électroniques conçus pour produire lesdites activations mécaniques des signaux de commande en fonction des signaux de contrôle, et une carte de contrôle conçue pour recevoir des instructions d'au moins un desdits équipements terrestres (TEk) et pour produire lesdits signaux de contrôle en fonction desdites instructions reçues et/ou d'instructions générées localement.
